# EUROPÄISCHE PATENTSCHRIFT

(11) **EP 2 780 160 B1**
(45) Veröffentlichungstag und Bekanntmachung des Hinweises auf die Patenterteilung: **16.09.2015**
(21) Anmeldenummer: 12832794.7
(22) Anmeldetag: 16.10.2012
(51) Int. Cl.: B32B 5/00, A62B 23/00, B01D 53/64, D04H 1/56, D04H 3/16

(54) **VLIESKÖRPER ZUM BINDEN VON QUECKSILBER**
NON-WOVEN BODY FOR BINDING MERCURY
CORPS NON TISSÉ PERMETTANT DE FIXER LE MERCURE

(30) Priorität: 17.11.2011 DE 102011118751
(43) Veröffentlichungstag der Anmeldung: 24.09.2014
(73) Patentinhaber: Spanner, Stephan, 81827 München (DE)
(72) Erfinder: Spanner, Stephan, 81827 München (DE)
(74) Vertreter: Kayser, Christoph
(86) Internationale Anmeldenummer: PCT/DE2012/001007
(87) Internationale Veröffentlichungsnummer: WO 2013/071901

(56) Entgegenhaltungen:
- EP-A1- 0 761 109
- DE-A1- 19 610 880
- DE-A1- 19 803 921
- DE-A1- 19 825 776
- Stephan Spanner: "Arzt-Maske", , 17. März 2010 (2010-03-17), XP002696156, Gefunden im Internet: URL:http://web.archive.org/web/20090501102 420/http://www.prophy-dent.com/arzt.php [gefunden am 2013-04-26]

## Beschreibung

Die vorliegende Erfindung betrifft einen Vlieskörper zum Binden von Quecksilber mit einem Grundkörper aus einem Vliesstoff, wobei der Grundkörper auf einer Außenseite mit Gold und auf der Innenseite mit Silber dotiert ist, der Grundkörper eine die Außenseite umfassende Außenlage und eine die Innenseite umfassende Innenlage umfasst, wobei zwischen der Außenlage und der Außenlage eine elektrisch neutrale Zwischenlage angeordnet ist.

Ein solcher Vlieskörper ist aus DE 198 25 776 A1 und aus Stephan Spanner, "Arzt-Maske", 17. März 2010, URL.-http://web.archive.org/web/2009050110240http://www.prophy-dent.com/arzt.php, bekannt. Seit etwas mehr als zehn Jahren werden z. B. Schutzmasken mit solchen Vlieskörpern zum Binden von Quecksilber regelmäßig in Zahnarztpraxen eingesetzt. Beim Bohren, Fräsen, Schleifen oder Polieren von Amalgamfüllungen entstehen quecksilberhaltige Aerosole, die von dem behandelnden Personal nicht eingeatmet werden sollen. In der Nähe des Patientenmundes entstehen beim Legen aber auch vom Entfernen von Amalgamfüllungen Quecksilberdämpfe bis zu einer Konzentration von 300 µg/m³ bis 300 µg/m³. Ohne eine Schutzmaske zum Binden von Quecksilber atmen sowohl der Patient, als auch der Zahnarzt und seine Stuhlassistenz solche Quecksilberdämpfe ein. Die Weltgesundheitsorganisation hat Konzentrationen von 50 µg/m³ als zulässige Obergrenze festgesetzt.

Ähnliche Probleme gibt es auch bei dem Umgang mit quecksilberhaltigen Energiesparlampen. Bis zu 20% der angelieferten Lampen zerbrechen auf dem Transport, so dass Geschäftsräume, LKWs, Wertstoffhöfe und Recyclingfabriken mit erheblichen Quecksilberkontaminationen belastet sind. Herkömmliche Staubmasken können die Quecksilberdämpfe nicht ausreichend filtern.

Die Schutzmasken zum Binden von Quecksilber weisen auf der Anströmseite, also der Außenseite, Gold auf, welches das Quecksilber schlagartig in Form von Goldamalgam bindet. Durch Verwendung von Gold bedampften OP-Masken können sowohl Ärzte als auch Patienten vor den Gefahren einer Quecksilberkontamination geschützt werden. Es gibt Unterschiede in der Gestaltung der Maske. So trägt das Personal Vollmasken, die über Nase und Mund getragen werden, und Behandelte tragen speziell genähte Teilmasken, welche von der Nasenwurzel bis zur Oberlippe getragen werden.

Zusätzlich zu der mit Gold dotierten Außenseite weist die Schutzmaske des Standes der Technik Silber auf der Innenseite auf. Silber schützt vor bakteriellen Angriffen, da es bakterizid wirkt. Die Silberschicht ist auf der Rückseite eines Gold beschichteten Trägermaterials aufgetragen. Das Trägermaterial ist in der Regel ein prägekalandriertes Polypropylenvlies mit einem Gewicht von 25 g/m² bis 50 g/m². Insgesamt besteht die Schutzmaske aus drei Vlieslagen, wobei die beiden dem Gesicht zugewandten Lagen wenig oder gar nicht prägekalandriert sind. Die Schutzmaske wird mit Falten gefertigt und mit einem eingenähten bzw. geschweißten Nasenbügel versehen. Beim Gebrauch wird der Nasenbügel über die Nasenwurzel in Form gebracht und der Mundschutz bis unter das Kinn gezogen. Damit wird erreicht, dass die Schutzmaske die Atemorgane Mund und Nase bedeckt und dicht sitzt.

Der Nachteil solcher Schutzmasken des Standes der Technik besteht darin, dass auf der Außenfläche eine ungleichmäßige Verteilung von Gold vorliegt, dass zwischen der Goldschicht und der Silberschicht dielektrische Effekte auftreten.

Die Aufgabe der vorliegenden Erfindung ist daher, einen Vlieskörper der eingangs genannten Art derart weiterzuentwickeln, dass keine dielektrischen Effekte zwischen der Goldschicht und der Silberschicht auftreten.

Die Aufgabe wird erfindungsgemäß dadurch gelöst, dass die Vlieszwischenlage mit Kohlenstoff-Nanoröhrchen dotiert ist.

Mit der Anordnung der elektrisch neutralen Vlieszwischenlage wird verhindert, dass zwischen dem Gold auf der Außenseite und dem Silber auf der Innenseite dielektrische Effekte auftreten. Diese werden ohne die Vlieszwischenlage dadurch begünstigt, dass durch Kalandrierung Sicken vorhanden sind, in denen sich an der Außenseite Gold und an der Innenseite Silber anreichert. Durch die Vlieszwischenlage wird ein Abstand zwischen Gold und Silber gehalten. Dadurch kann die Abscheideleistung der Schutzmaske deutlich verbessert werden und liegt vorzugsweise zwischen 98% und 100%.

Ein weiterer Vorteil der vorliegenden Erfindung ist, dass die Außenseite sickenfrei ist. Es ist möglich, die erste Vlieslage als eine glatt kalandrierte Vlieslage auszubilden. Durch eine Vermeidung von Sicken auch auf der Außenseite wird weniger Gold verbraucht. Das Gold wird gleichmäßiger auf der Außenseite verteilt.

Die Dotierung der Vlieszwischenlage mit Kohlenstoff-Nanoröhrchen führt zu dem Vorteil, dass dann, wenn die Oberfläche der ersten Vlieslage abgesättigt ist und die Abscheideleistung zurückgeht, ein Haltepunkt bei einer Abscheideleistung von 80% und ein Rückgang der Gesamtabscheideleistung bis auf Null verzögert wird. Offensichtlich teilen sich ab ca. 80% Abscheideleistung die filternde Goldoberfläche und die Kohlenstoff-Nanoröhrchen die Bindungsarbeit und zögern so die Sättigung mit Quecksilber hinaus.

Ein weiterer Vorteil der vorliegenden Erfindung ist, dass die Innenseite eine nachgiebige Umfangswulst aufweist. Durch die nachgiebige Umfangswulst wird erreicht, dass die Gefahr des Ziehens von Falschluft bei schlecht sitzenden Masken reduziert wird.

Ein weiterer Vorteil der vorliegenden Erfindung ist, dass die Umfangswulst latexfrei ist. Viele Träger von Schutzmasken reagieren allergisch auf Latex.

Ein weiterer Vorteil der vorliegenden Erfindung ist, dass die zweite Vlieslage eine Innenschicht aus einem hautfreundlichen Material aufweist, welches die Innenseite bildet. Dadurch werden Hautirritationen vermieden.

Weitere Vorteile der vorliegenden Erfindung ergeben sich aus den Merkmalen der Unteransprüche.

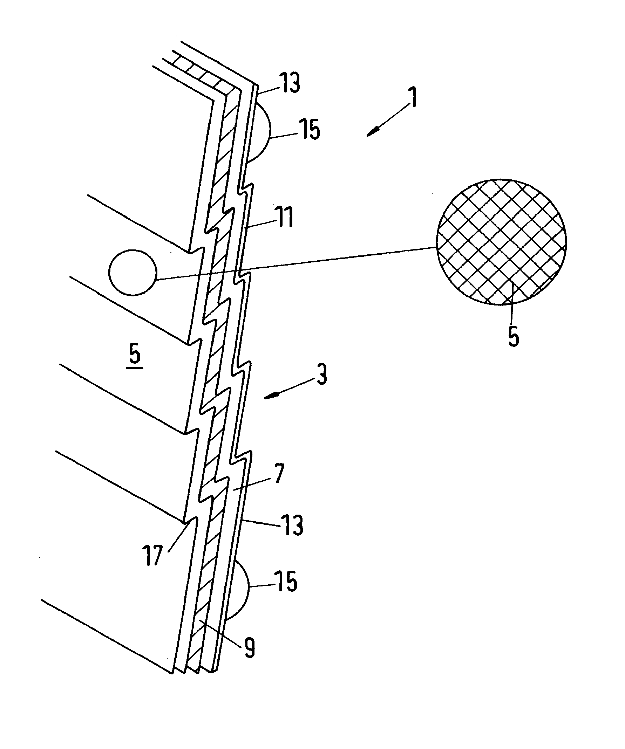

Eine Ausführungsform der vorliegenden Erfindung wird im Folgenden anhand der Zeichnung näher beschrieben. Die einzige Figur zeigt eine schematische Darstellung eines Ausschnitts einer Schutzmaske gemäß vorliegender Erfindung.

In der Figur ist ein Teil eines Vlieskörpers 1 schematisch dargestellt. Der Vlieskörper 1 hat einen Grundkörper 3. Der Grundkörper 3 ist aus einem Vliesmaterial hergestellt und umfasst eine Außenlage 5, eine Innenlage 7 und eine Zwischenlage 9. Die Außenlage 5 ist z. B. beim Tragen des Vlieskörpers 1 als Schutzmaske auch die Außenseite oder Anströmseite der verunreinigten Umgebungsluft, während die Innenlage 7 beim Tragen dem Gesicht des Trägers zugewandt ist.

Auf der Außenlage 5 ist Gold gleichmäßig aufgebracht. Das Gold wird vorzugsweise auf die Außenlage 5 aufgedampft. Die Außenlage 5 ist in der vorliegenden Ausführungsform sickenfrei. Die Herstellung des Vlieskörpers 1 erfolgt z. B. durch ein Glattkalandern oder durch ein Thermobonding, um der Außenlage 5, der Innenlage 7 und auch der Zwischenlage 9 die notwendige Festigkeit zu verleihen.

Auf der Innenlage 7 ist Silber gleichmäßig aufgebracht. Das Silber wird vorzugsweise auf die Innenlage 7 aufgedampft. Die Innenlage 7 ist in der vorliegenden Ausführungsform sickenfrei. Die Herstellung erfolgt z. B. durch ein Glattkalandern oder durch ein Thermobonding, um der Innenlage 7 die notwendige Festigkeit zu verleihen.

Zwischen der Außenlage 5 und der Innenlage 7 ist die elektrisch neutrale Zwischenlage 9 angeordnet. Diese Zwischenlage 9 isoliert die Außenlage 5 und die Innenlage 7 voneinander, so dass selbst bei einer Sickenbildung in der Außenlage 5 und der Innenlage 7 keine dielektrischen Effekte auftreten. Die Zwischenlage 9 umfasst in einer Ausführungsform auch Kohlenstoff-Nanoröhrchen (nicht dargestellt). Die Zwischenlage 9 ist dann vorzugsweise in einem Melt-Blown Verfahren hergestellt.

In der Figur ist die Glattheit der Außenlage 5 in Vergrößerung dargestellt. Für die Verwendung als Schutzmaske ist der Vlieskörper 1 in Falten gelegt. Bei anderen Ausführungsformen können die Falten entfallen.

Der Vlieskörper 1 weist in der Ausführungsform als Schutzmaske eine Innenschicht 11 auf, die innen auf der Innenlage 7 aufgebracht ist und aus einem hautfreundlichen Material besteht, um Hautirritationen zu vermeiden. Zudem weist die Innenlage 7 an einem Rand 13 eine latexfreie Umgebungswulst 15 auf, um eine dichte Anlage an einem Gesicht zu gewährleisten und das Einziehen von Falschluft zu verhindern. Die Größe des Vlieskörpers 1 als Schutzmaske ist so bemessen, dass sich dieser in einer Ausführungsform für Patienten zwischen Nasenwurzel und Oberlippe erstreckt, wobei Falten 17 eine Anpassung an individuelle Körpermaße ermöglichen. In einer Ausführungsform für Ärzte oder medizinisches Personal ist der Vlieskörper 1 so bemessen, dass sich die Schutzmaske von der Nasenwurzel aus auch über einen Mund erstreckt. Auch hier dienen die Falten 17 dazu, eine Anpassung an individuelle Körpermaße zu ermöglichen.

Der Vlieskörper 1 kann in einer weiteren Ausführungsform auch zur Abdeckung von zerbrochenen quecksilberhaltigen Energiesparlampen oder zum Reinigen von quecksilberhaltigen Oberflächen verwendet werden. In einer Ausführungsform ist der Vlieskörper 1 eine Innenverkleidung für einen Kasten (nicht dargestellt) aus Karton oder einem anderen Material.

Zum Abreinigen von mit Quecksilber kontaminierten Oberflächen wird ein handelsübliches Shampoo oder ein anderes Waschmittel in flüssiger Form mit Nanopartikeln aus Gold versetzt und auf diese kontaminierten Oberflächen aufgebracht. Anschließend wird die Oberfläche mit einem feuchten Tuch abgewischt und mit einem goldbeschichteten Reinigungstuch trocken gerieben. Sowohl das Waschwasser, als auch die verwendeten Tücher werden in einem gasdichten Behälter gesammelt und dem Recycling zugeführt.

### Bezugszeichenliste

- 1: Vlieskörper
- 3: Grundkörper
- 5: Außenlage
- 7: Innenlage
- 9: Zwischenlage
- 11: Innenschicht
- 13: Rand
- 15: Umfangswulst
- 17: Falten

## Patentansprüche

1. Vlieskörper (1) zum Binden von Quecksilber mit einem Grundkörper (3) aus einem Vliesstoff, wobei der Grundkörper (3) auf einer Außenseite mit Gold und auf der Innenseite mit Silber dotiert ist, der Grundkörper (3) eine die Außenseite umfassende Außenlage (5) und eine die Innenseite umfassen Innenlage (7) umfasst, wobei zwischen der Außenlage (5) und der Außenlage (7) eine elektrisch neutrale Zwischenlage (9) angeordnet ist.
**dadurch gekennzeichnet,**
**dass** die Zwischenlage (9) mit Kohlenstoff-Nanoröhrchen dotiert ist.

2. Vlieskörper nach Anspruch 1,
**dadurch gekennzeichnet,**
**dass** die Außenlage (5) sickenfrei ist.

3. Vlieskörper nach Anspruch 1 oder 2,
**dadurch gekennzeichnet,**
**dass** der Grundkörper (3) eine Schutzmaske bildet und die Innenlage (5) eine nachgiebige Umfangswulst (15) aufweist.

4. Vlieskörper nach Anspruch 3,
**dadurch gekennzeichnet,**
**dass** die Umfangswulst (15) latexfrei ist.

5. Vlieskörper nach einem der vorstehenden Ansprüche,
**dadurch gekennzeichnet,**
**dass** die Außenlage (7) eine Innenschicht (17) aus einem hautfreundlichen Material aufweist, welches die Innenseite bildet.

6. Vlieskörper nach einem der Ansprüche 3 bis 5,
**dadurch gekennzeichnet,**
**dass** der Grundkörper (3) eine Kontur aufweist, die im Benutzungszustand einen Gesichtsbereich zwischen Nasenwurzel und Oberlippe abdeckt.

7. Vlieskörper nach einem der Ansprüche 1 bis 6,
**dadurch gekennzeichnet,**
**dass** die Außenlage (5) mit Gold bedampft ist.

8. Vlieskörper nach einem der vorstehenden Ansprüche,
**dadurch gekennzeichnet,**
**dass** die Außenlage (5) und die Innenlage (7) sickenfrei kalandriert sind.

9. Vlieskörper nach einem der Ansprüche 1 bis 7,
**dadurch gekennzeichnet,**
**dass** der Grundkörper (3) durch Thermobonding verfestigt ist.

10. Vlieskörper nach einem der Ansprüche 1 bis 7,
**dadurch gekennzeichnet,**
**dass** der Grundkörper (3) durch ein Melt-Blown-Verfahren hergestellt ist.

## Claims

1. A non-woven body (1) for binding mercury, comprising a base body (3) made from a non-woven fabric, wherein the base body (3) is doped with gold on the outside and with silver on the inside, the base body (3) comprises an outer ply (5) that encloses the outside and an inner ply (7) that encloses the inside, wherein an electrically neutral intermediate ply (9) is arranged between the outer ply (5) and the inner ply (7), **characterized in that** the intermediate ply (9) is doped with carbon nanotubes.

2. The non-woven body according to claim 1, **characterized in that** the outer ply (5) is free from beads.

3. The non-woven body according to claim 1 or 2, **characterized in that** the base body (3) forms a protective mask and the inner ply (7) has a flexible peripheral bead (15).

4. The non-woven body according to claim 3, **characterized in that** the peripheral bead (15) is latex-free.

5. The non-woven body according to any one of the preceding claims, **characterized in that** the inner ply (7) has an inner layer (17) made from a dermatologically compatible material that forms the inside.

6. The non-woven body according to any one of claims 3 to 5, **characterized in that** the base body (3) has a contour that covers a facial area between the bridge of the nose and the upper lip when in use.

7. The non-woven body according to any one of claims 1 to 6, **characterized in that** the outer ply (5) is coated with gold by vapour deposition.

8. The non-woven body according to any one of the preceding claims, **characterized in that** the outer ply (5) and the inner ply (7) are calendered free from beads.

9. The non-woven body according to any one of claims 1 to 7, **characterized in that** the base body (3) is strengthened by thermobonding.

10. The non-woven body according to any one of claims 1 to 7, **characterized in that** the base body (3) is prepared in a melt-blown process.

## Revendications

1. Corps fibreux (1) pour lier le mercure, comportant un corps de base (3) en non-tissé, le corps de base (3) étant recouvert d'or sur une face extérieure et d'argent sur la face intérieure, le corps de base (3) comprenant une couche extérieure (5) entourant la face extérieure et une couche intérieure (7) entourant la face intérieure, une couche intermédiaire électriquement neutre (9) étant disposée entre la couche extérieure (5) et la couche intérieure (7), **caractérisé en ce que** la couche intermédiaire (9) est recouverte de nanoparticules de carbone.

2. Corps fibreux selon la revendication 1, **caractérisé en ce que** la couche extérieure (5) est exempte de moulures.

3. Corps fibreux selon la revendication 1 ou 2, **caractérisé en ce que** le corps de base (3) constitue un masque protecteur et que la couche intérieure (5) présente un bourrelet périphérique résilient (15).

4. Corps fibreux selon la revendication 3, **caractérisé en ce que** le bourrelet périphérique (15) est exempt de latex.

5. Corps fibreux selon une des revendications précédentes, **caractérisé en ce que** la couche extérieure (7) présente une couche intérieure (17) en matériau toléré par la peau qui forme la face intérieure.

6. Corps fibreux selon une des revendications 3 à 5, **caractérisé en ce que** le corps de base (3) présente un contour qui, en état d'utilisation, recouvre une partie du visage entre la racine du nez et la lèvre supérieure.

7. Corps fibreux selon une des revendications 1 à 6, **caractérisé en ce que** la couche extérieure (5) est vaporisée à l'or.

8. Corps fibreux selon une des revendications précédentes, **caractérisé en ce que** la couche extérieure (5) et la couche intérieure (7) sont calandrées sans moulure.

9. Corps fibreux selon une des revendications 1 à 7, **caractérisé en ce que** le corps de base (3) est consolidé par thermocollage.

10. Corps fibreux selon une des revendications 1 à 7, **caractérisé en ce que** le corps de base (3) est fabriqué par procédé de fusion-soufflage.
